# EUROPEAN PATENT APPLICATION

(11) **EP 1 541 291 A1**
(43) Date of publication of application: **15.06.2005**
(21) Application number: 03771271.8
(22) Date of filing: 16.07.2003
(51) Int. Cl.: B25C 5/16

(54) **STAPLER AND CARTRIDGE**

(30) Priority: 26.07.2002 JP 2002217755
(71) Applicant: Max Co., Ltd., Tokyo 103-8502 (JP)
(72) Inventor: SHIMIZU, Toshio, Tokyo 103-8502 (JP); HAKOZAKI, Katsuya, Tokyo 103-8502 (JP); KANAI, Toshiyuki, Tokyo 103-8502 (JP)
(74) Representative: Turi, Michael, Dipl.-Phys.
(86) International application number: PCT/JP2003/009034
(87) International publication number: WO 2004/011202

(57) **Abstract**

In a stapler for supplying a staple 1 formed with a pair of staple legs into a strike out passage 17, striking out the staple supplied into the strike out passage 17 to sheets P to be bound, and folding to bend the staple legs penetrated through the sheets P along a rear face of the sheets, a guide member 21, arranged in the strike out passage 17 and including a guide piece 22 for supporting sides of base portions of the staple legs from inner sides in a process that the staple leg is penetrating the sheets, is formed.

## Description

### Technical Field:

The present invention relates to a stapler for striking out a staple formed by folding to bend a pair of staple legs in right angle at both ends of a crown portion to sheets to be bound by a driver plate and folding to bend the staple leg penetrated through the sheets to be bound along a rear face of the sheets by a clincher to bind the sheets, and a cartridge to be mounted in a stapler and containing a number of staples.

### Background Art:

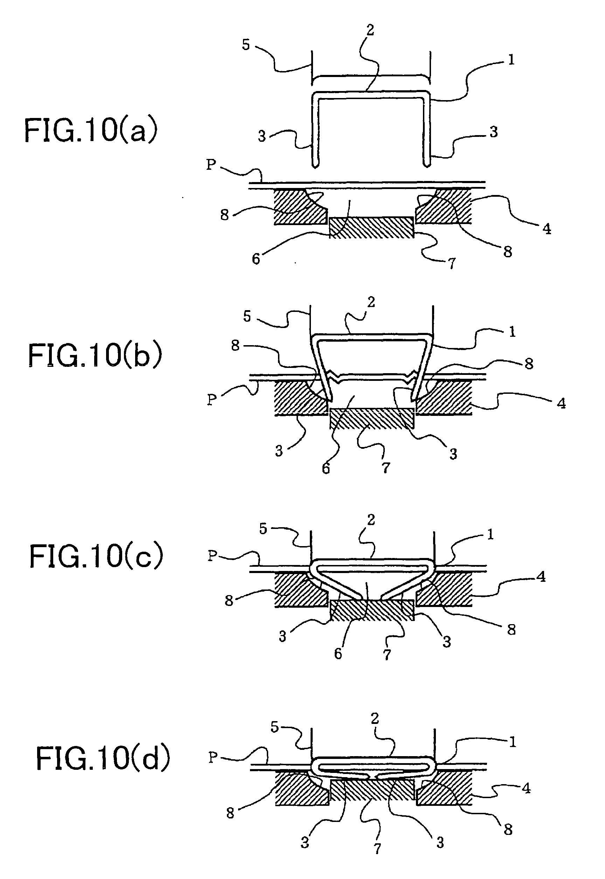

There is known a stapler, as shown in Fig.10(a), which is constituted such that a staple 1 formed with a pair of staple legs 3 formed by being folded to bend in right angle from both ends of a horizontal crown portion 2 is struck out by a driver plate 5 from a cartridge or a magazine portion containing the staples 1 to sheets P to be bound mounted on a table 4, and the staple leg 3 penetrating the sheets to be bound is folded to bend along a rear face of the sheets P by a clincher mechanism 7 arranged at inside of an opening portion 6 formed at the table 4.

According to the stapler, the opening portion 6 formed at the table 4 is formed with bent guide faces 8 for engaging with the staple legs 3 of the staple 1 on both sides thereof, and the bent guide faces 8 are engaged with front end portions of the staple legs 3 struck out by the driver plate 5, penetrating the sheets P and advancing to the opening portion 6 of the table 4 to bend the staple legs 3 to direct to inner sides to form a curl shape. By forming the curl shape at the staple legs 3 in this way, thereafter, when the staple legs 3 finished to penetrate the sheets P are formed to be along a lower face of the sheets P by the clincher mechanism 7, the front ends of the staple legs 3 are formed to be brought into contact with the rear face of the sheets P.

Meanwhile, in the case in which a number of the sheets P is small or in the case in which thin sheets P is bound in the stapler, when the front ends of the staple legs 3 penetrating the sheets P are brought into contact with the bent guide faces 8 of the table 4 and the front ends of the staple legs 3 are proximate to inner sides as shown by Fig.10(b), by bending the sheets P penetrated up to substantially center portions of the staple legs 3 or breaking portions of holes to which the staple legs 3 are penetrated, the staple legs 3 are formed to be folded to bend from base portions proximate to the crown portion 2.

When the staple legs 3 are bent from sides of the base portions as described above, as shown by Fig. 10(c), in a state in which the staple legs 3 are finished to penetrate the sheets P, the staple legs 3 are formed substantially linearly and even when the staple legs 3 are pressed to the side of the rear face of the sheets P by operating the clincher mechanism 7 as shown by Fig. 10(d) under the state, the front end portions of the staple legs 3 are not brought into a state of being brought into close contact with the rear face of the sheets to be bound to bring about loose clinch. According to such a loose clinch, a sharp front end of the staple leg 3 is brought into a state of being floated from the rear face of the sheets to be bound and therefore, there poses a problem that the staple leg is intertwined with other document or the staple leg stings the hand.

### Disclosure of the Invention

It is a problem of the invention to provide a stapler preventing a loose clinch state from being brought about even when a number of sheets is small or thin sheets is bound by forming a curl shape in a bent shape at a front end portion of a staple leg during a time period in which the staple is struck out by a driver plate and the staple leg is penetrated through the sheets to be bound and a cartridge.

In order to resolve the above-described problem, a stapler of the invention is a stapler for binding sheets to be bound by supplying a staple formed with a pair of staple legs formed to fold to bend in right angle from both ends of a crown portion into a strike out passage, striking out the staple supplied into the strike out passage to the sheets to be bound by the driver plate, and folding to bend the staple leg penetrated through the sheets to be bound along a rear face of the sheets to be bound by a clincher mechanism arranged to be opposed to the driver plate, characterized in forming a guide member arranged in the strike out passage for supporting sides of base portions of the staple legs from inner sides in a process of penetrating the sheets to be bound by the staple legs of the staple.

Further, the stapler is characterized in that the guide member is formed with a guide piece arranged in the strike out passage and an inclined face continuous to the guide piece and the guide piece is escaped from the strike out passage by moving the guide member by bringing the inclined face into contact with the crown portion of the staple.

Further, the invention provides a cartridge including the strike out passage and the guide member.

Further, the invention provides a cartridge in which the guide member is integrally molded to be single-piece.

### Brief description of the drawings:

Fig.1 is a vertical side view of a stapler embodying a loose clinch preventing mechanism of the invention.
Fig.2 is a plane view of a staple cartridge of the stapler of Fig.1.
Fig. 3 is a vertical side sectional view of a staple cartridge the same as that of Fig.2.
Fig.4 is a front view of a staple cartridge the same as that of Fig.2.
Fig.5 is a sectional view partially enlarging a cartridge the same as that of Fig.2.
Fig.6 (a) and Fig.6(b) show a state before operating the loose clinch preventing mechanism of the invention, Fig.6(a) shows a vertical front sectional view, and Fig.6(b) shows a vertical side sectional view.
Fig.7(a) and Fig.7(b) show an operating state in which a staple leg starts to penetrate sheets to be bound, Fig.7(a) shows a vertical front sectional view, and Fig.7(b) shows a vertical side sectional view.
Fig. 8(a) and Fig.8(b) show a state of being in the midst of folding to bend the staple leg, Fig.8(a) shows a vertical front sectional view, and Fig.8(b) shows a vertical side sectional view.
Fig.9(a) and Fig.9(b) show an operating state in which the staple leg is folded to bend to a rear face of the sheets to be bound by a clincher mechanism, Fig. 9(a) shows a vertical front sectional view, and Fig.9(b) shows a vertical side sectional view.
Fig.10(a) through Fig. 10(d) show a stapler of a background art, Fig.10(a) is a vertical front sectional view showing a state before the staple is operated, Fig.10(b) is a vertical front sectional view showing a state in which a staple leg starts to penetrate sheets to be bound, Fig.10(c) is a vertical front sectional view showing an operating state in which the staple leg is finished to penetrate the sheets to be bound, and Fig.10(d) is a vertical front sectional view showing a state in which the staple leg is folded to bend to a rear face of the sheets to be bound by a clincher mechanism.

Further, in notations of the drawings, numeral 1 designates a staple, numeral 2 designates a crown portion, numeral 3 designates a staple leg, numeral 10 designates an electric stapler, numeral 12 designates a driver plate, numeral 13 designates a clincher arm, numeral 14 designates a cartridge, numeral 17 designates a strike out passage, numeral 18 designates a table, numeral 19 designates a clincher mechanism, numeral 20 designates an opening, numeral 21 designates a guide member, numeral 22 designates a guide piece, and numeral 23 designates an inclined face.

### Best Mode for Carrying Out the Invention:

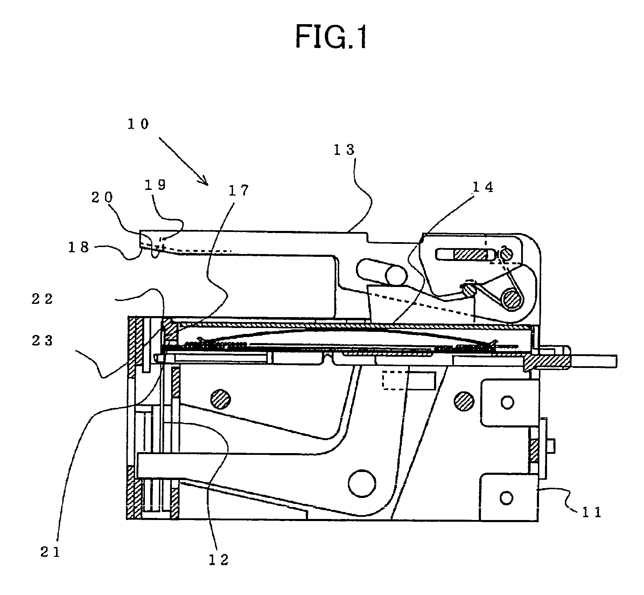

An explanation will be given of a mode for carrying out the invention based on embodiments shown in the drawings as follows. Fig.1 shows an embodiment of an electric stapler mounted with a cartridge according to the invention, and the electric stapler shown in the embodiment is a built-in type electric stapler installed in an apparatus of, for example, a copier, a printer or a facsimile machine or the like for automatically binding a predetermined number of sheets which are copied, printed or facsimile-received. The electric stapler is arranged with an electric motor constituting a drive source and the driver plate 12 driven thereby at a lower portion of a frame 11 constituting the stapler main body 10, and the clincher arm 13 for folding to bend the staple leg 3 of the staple 1 struck out by the driver plate and penetrated through the sheets to be bound by an upper portion of the frame 11 is pivotably supported by an upper portion of the frame 11.

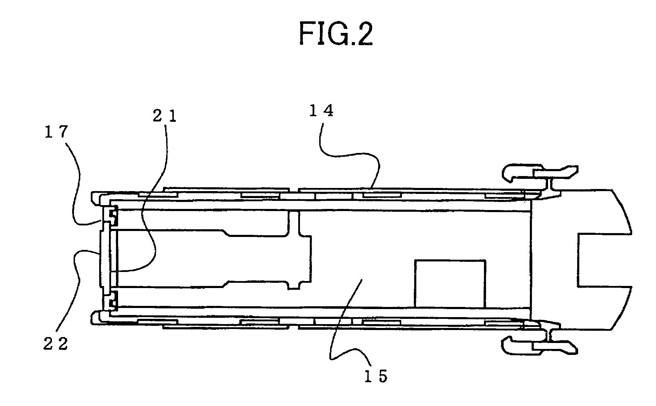

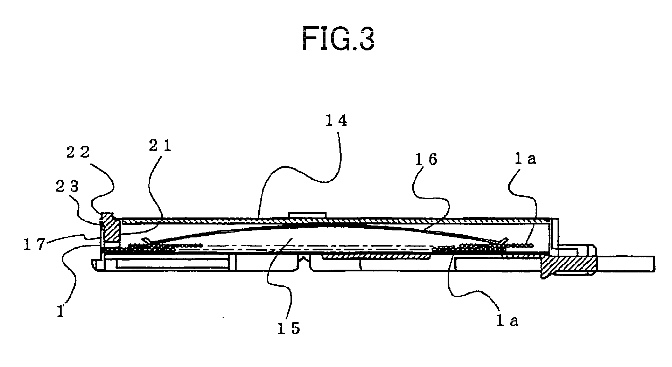

Further, the staple 1 used in the embodiment is sheets staple 1a connected in sheet-like shape connecting a number of staples in a straight shape before being formed in a C-shape in an aligned state, and is formed in the C-shape by a forming plate provided at inside of the electric stapler main body 10 to be struck out by the driver plate 12. The cartridge 14 containing the sheets staple 1a is mounted attachably and detachably to and from a magazine portion formed between the clincher arm 13 and the driver plate 12 from a rear side of the frame 11. Also as shown by Fig.2 and Fig.3, a plurality of the sheets staples 1a contained in a laminated state and a leaf spring piece made of a metal for pressing the sheets staple 1a to a side of a bottom portion of a containing portion 15 at inside of the cartridge 14 are contained at inside of the containing portion 15 formed at an inner portion of the cartridge 14.

The sheets staple 1a arranged at the bottom portion of the containing portion 15 of the cartridge 14 is pressed to the bottom portion of the cartridge 14 by an urge force of the leaf spring piece 16, supplied to the strike out passage 17 formed at a front end portion of the cartridge 14 by a supply mechanism provided at the stapler main body 10, formed in the C-shape by the forming plate provided at the stapler main body 10 and thereafter struck out to sheets P to be bound by the driver plate 12 provided at the stapler main body 10.

The strike out passage 17 for striking out the staple 1 formed in the C-shape to the sheets is formed between a front end face of the cartridge 14 mounted to the stapler main body 10 and the stapler main body 10, and the staple 1 formed in the C-shape is struck out to the sheets to be bound by the driver plate 12 via the strike out passage 17. The clincher arm 13 is provided with the table 18 for pinching the sheets P between the table 18 and the cartridge 14 to be opposed to the cartridge 14, and the clincher mechanism 19 for forming to fold to bend the staple leg 3 struck out from the strike out passage 17 and penetrated through the sheets P along a rear face of the sheets P and the clincher mechanism 19 is provided to be contained at inside of the opening 20 formed at a face of the table 18.

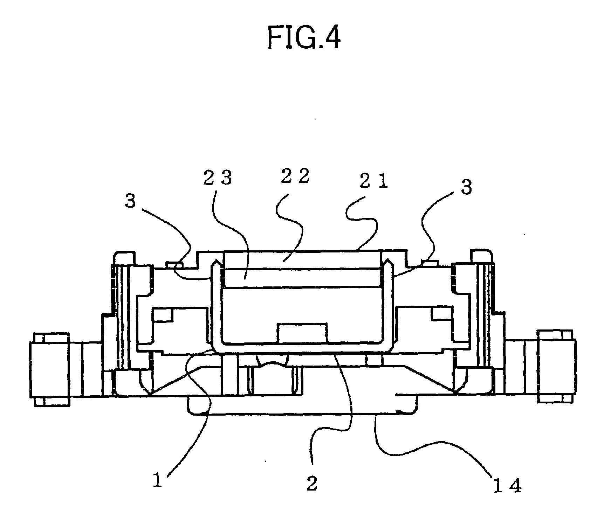

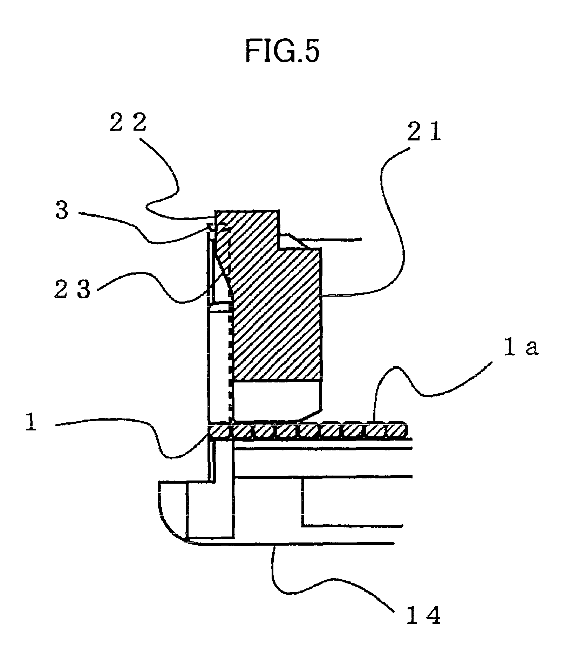

As shown by Fig.4 and Fig.5, a front end face of the cartridge 14 formed with the strike out passage 17 is formed with the guide member 21 including the guide piece 22 arranged between the pair of staple legs 3 of the staple 1 formed in a C-shape during a time period of striking out the staple 1 in the strike out passage 17 in a direction of the clincher arm 13, and by the guide piece 22 of the guide member 21, inner side faces of the two staple legs 3 are guided to prevent the staple legs 3 from being bent on sides of base portions thereof proximate to the crown portion 2. The guide piece 22 is formed integrally with the guide member 21 to be arranged between the two staple legs 3 on a side of a front end thereof brought into contact with the sheets P, and the inclined face 23 is continuously formed to the guide piece 22. The guide member 21 is formed to be able to move such that the guide piece 22 is escaped from the strike out passage 17 by bringing the crown portion 2 of the staple 1 struck out along the strike out passage 17 into contact with the inclined face 23.

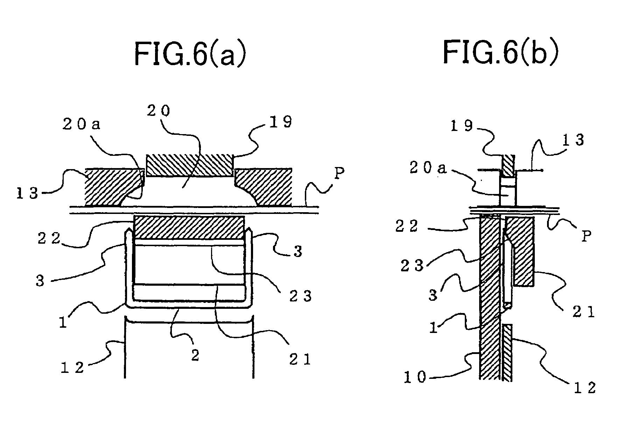

An explanation will be given of states in the case of binding the thin sheets P to be bound by the loose clinch preventing mechanism according to the above-described embodiment in reference to Fig.6 through Fig.9. As shown by Fig.6(a) and Fig.6(b), prior to operating the driver plate 12, the clincher arm 13 is operated to pinch the sheets P arranged at the upper face of the cartridge 14 between the upper face of the cartridge 14 and the table face 18 of the clincher arm 13. Further, the staple 1 formed in the C-shape is arranged at inside of the strike out passage 17, and the guide piece 22 of the guide member 21 formed at the front end face of the cartridge 14 and projected into the strike out passage 17 is made to advance between the pair of staple legs 3 of the staple 1.

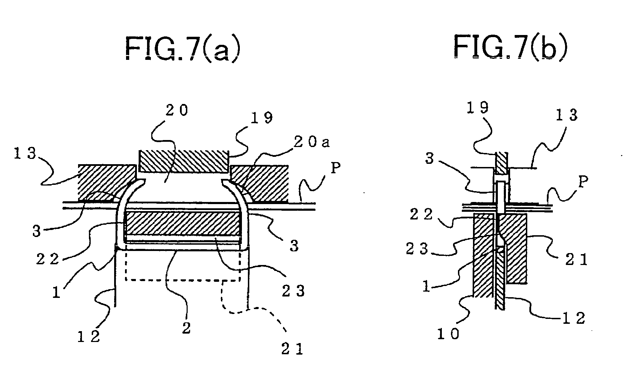

When the driver plate 12 is driven, as shown by Fig. 7(a) and Fig. 7(b), the front ends of the staple legs 3 of the staple 1 struck out from the strike out passage 17 by the driver plate 12 are penetrated through the sheets P and made to advance into the opening 20 formed at the table 18 containing the clincher mechanism 19, the front ends of the staple legs 3 are brought into contact with bent guide faces 20a formed on the both sides of the opening 20, and the front ends of the staple legs 3 are displaced to inner sides along the bent guide faces 20a. At this occasion, portions of the staple legs 3 proximate to the crown portion 2 are supported from inner sides by the guide piece 22 and therefore, the staple legs 3 of the staple 1 are prevented from being bent from the base portions and the front end portion of the staple legs 3 are bent to inner sides, further, in accordance with advancement of penetration of the staple legs 3 to the sheets P, a curl shape in a bent shape is formed at the front end portions of the staple legs 3.

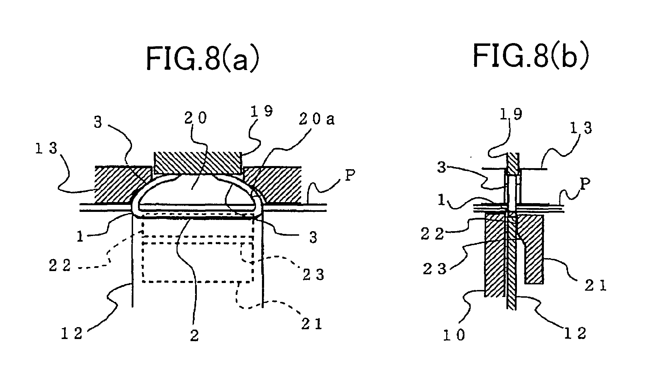

When the crown portion 2 of the staple 1 pressed to the sheets P by the driver plate 12 reaches the inclined face 23 of the guide member 21, the inclined face 23 of the guide member 21 is brought into contact with the crown portion 2 to operate the guide piece 22 to escape from the strike out passage 17. Further, when the staple 1 is struck by the driver plate 12 and the crown portion 2 is struck to the sheets P up to a position of being brought into contact with a lower face of the sheets P, as shown by Fig.8(a) and Fig.8(b), the front end portions of the staple legs 3 formed in the curl shape in the bent shape are arranged on a side of the lower face of the clincher mechanism 19 arranged at inside of the opening 20 of the table 18.

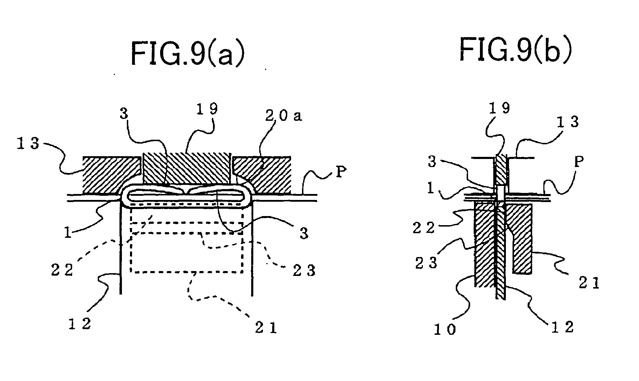

Thereafter, as shown by Fig.9(a) and Fig.9(b), the clincher mechanism 19 is operated to a lower side, and the two staple legs 3 formed in the curl shape in the bent shape penetrated through the sheets P are pressed to an upper face of the sheets P. At this occasion, the portions of the staple legs 3 of the staple 1 are previously formed with the curl shape in the bent shape and therefore, the front end portions of the staple legs 3 pressed by the clincher mechanism 19 are brought into close contact with the upper face of the sheets to be bound to finish to bind the sheets to be bound without bringing about loose clinch.

Although according to the embodiment, the guide member 21 for supporting the inner sides of the staple legs 3 is integrally molded into single-piece with the cartridge 14 in order to downsize the electric stapler and reduce cost, in the invention of Claim 1, a guide member formed with the guide piece 22 may be formed by a part separate from the cartridge 14 and assembled to the cartridge. Further, although according to the above-described embodiment, the sheets staple 1a connected with a number of the staples in the straight shape with each other in the aligned state is charged into the cartridge 14 and mounted to the staple main body 10 having the forming plate for forming the staple in the straight shape in the C-shape, the cartridge of the invention is effective even when the invention is embodied to a cartridge which is charged with a staple previously formed into the C-shape to be mounted to a stapler main body which is not provided with the forming plate.

### Industrial Applicability:

As described above, according to the staple and the cartridge of the invention, there is formed the guide member formed with the guide piece arranged on the inner sides of the staple legs in the strike out passage, the sides of the base portions of the staple legs are supported from the inner sides by the guide piece in the process that the staple leg is penetrating the sheets legs and therefore, even when thin sheets is bound, during the staple leg is penetrating the sheets, the inner side faces on the sides of the base portions of the staple legs are supported by the guide member, the base portions of the staple legs are restrained from being bent, the staple legs are not bent from the sides of the base portions proximate to the crown portion, and even in the case of binding thin sheets, the front end portions of the staple legs are formed in the curl shape and loose clinch can be prevented.

Further, by integrally forming the guide member to be single-piece with the cartridge, forming the inclined face continuous to the guide piece at the guide member and bringing the inclined face into contact with the crown portion of the staple, the guide member is displaced such that the guide piece is escaped from inside of the strike out passage and therefore, the cartridge capable of preventing loose clinch can be produced by a simple constitution and cost can be reduced.

## Claims

1. A stapler comprising:
a strike out passage, that a staple is supplied thereto, for guiding the staple to sheets to be bound, wherein the staple is formed with a pair of staple legs formed to fold to bend in right angle from both ends of a crown portion;
a driver plate for striking out the staple supplied into the strike passage to the sheets;
a clincher mechanism arranged to be opposed to the driver plate for folding to bend the staple leg penetrated through the sheets along a rear face of the sheets; and
a guide member for supporting a side of a base portion of the staple leg from an inner side during a process that the staple leg of the staple is penetrating the sheets.

2. The stapler according to Claim 1, wherein the guide member includes a guide piece disposed in the strike out passage and an inclined face continuously formed to the guide piece; and
wherein the guide member is moved in a direction of escaping from the strike out passage by bringing the inclined face into contact with the crown portion of the staple.

3. A cartridge to be mounted in a stapler and for containing a number of the staples, wherein the stapler comprises a strike out passage supplied with a staple formed with a pair of staple legs formed to fold to bend in right angle from both ends of a crown portion for guiding the staple to a sheets to be bound, a driver plate for striking out the staple supplied into the strike out passage to the sheets, and a clincher mechanism arranged to be opposed to the driver plate for folding to bend the staple leg penetrated through the sheets along a rear face of the sheets,
wherein the strike out passage is arranged at a front end face of the cartridge,
comprising:
a guide member for supporting a side of a base portion of the staple leg from an inner side during a process that the staple leg is penetrating the sheets.

4. The cartridge according to Claim 3, wherein the guide member is integrally molded to be single-piece with the cartridge.

5. The cartridge according to Claim 3, wherein the guide member includes a guide piece disposed in the strike out passage and an inclined face continuously formed to the guide piece; and
wherein the guide member is moved in a direction of escaping from the strike out passage by bringing the inclined face into contact with the crown portion of the staple.
